# EUROPÄISCHE PATENTSCHRIFT

(11) **EP 1 334 784 B1**
(45) Veröffentlichungstag und Bekanntmachung des Hinweises auf die Patenterteilung: **27.06.2007**
(21) Anmeldenummer: 02026726.6
(22) Anmeldetag: 30.11.2002
(51) Int. Cl.: B21D 53/84, B21D 39/04

(54) **Verfahren und Vorrichtung zum Fügen von gebauten Hohlwellen**
Method and apparatus for assembling constructed cam shafts
Procédé et appareil pour assembler des arbres à cames démontables

(30) Priorität: 08.02.2002 DE 10205540
(43) Veröffentlichungstag der Anmeldung: 13.08.2003
(73) Patentinhaber: Muhr und Bender KG, 57439 Attendorn (DE)
(72) Erfinder: Asbeck, Jochen, Dr.-Ing., 57439 Attendorn (DE); Blöcker, Henning, Dipl.-Ing., 21435 Stelle (DE)
(74) Vertreter: Neumann, Ernst Dieter

(56) Entgegenhaltungen:
- EP-A- 0 213 529
- EP-A- 0 295 281
- WO-A-88/04719
- DE-A- 3 933 565
- GB-A- 2 156 937
- US-A- 4 881 680

## Beschreibung

### Beschreibung

Die Erfindung betrifft ein Verfahren und eine Vorrichtung zum Fügen von gebauten Hohlwellen wie Nockenwellen oder Getriebewellen, die aus einem Rohr und auf dieses aufgeschobenen Aufbauteilen wie Nocken, Flanschen, Lagerhülsen, Impulsgebern, Zahn- oder Kettenrädern bestehen, wobei das Rohr innerhalb der Aufbauteile in Einzelabschnitten durch innere Druckaufgabe so radial plastisch aufgeweitet wird, daß die Aufbauteile im bleibenden Festsitz auf dem Rohr festgelegt werden.

Das Wesen des Verfahrens besteht darin, daß die Gesamtheit der Antriebselemente, insbesondere sämtliche Nocken und Antriebsritzel einer Nockenwelle als Einzelelemente mit Durchgangsöffnung hergestellt und auf ein Rohr aufgeschoben werden. In das Rohr wird danach ein Sondenkörper eingeschoben, der einzelne Wirkbereiche umfaßt, die den Antriebselementen axial zugeordnet sind und die aus einem durch zwei Ringdichtungen begrenzten Sondenabschnitt bestehen, in dem hydraulisches Medium mit hohem Druck von bis zu 3000 bar ausgebracht werden kann. In dem entsprechenden Längsabschnitt wird dadurch das Rohr plastisch aufgeweitet, so daß ein Festsitz der Antriebselemente auf der Hohlwelle zustande kommt. Die Verformung der Antriebselemente bewegt sich dabei bevorzugt in rein elastischem Bereich.

Aus der EP 0 213 529 B1 sind grundsätzlich ein Verfahren und eine Vorrichtung zum gleichzeitigen Befestigen einer Vielzahl von Antriebselementen wie Nocken, Zahnrädern und Lagerschalen auf einer Hohlwelle in einem Arbeitsgang bekannt. Das Problem der lagegenauen Halterung der Antriebselemente gegenüber der Hohlwelle, insbesondere bezüglich der Winkelgenauigkeit, ist hierbei weitgehend ungelöst geblieben.

Aus der DE 39 33 565 C2 sind ein Verfahren und eine Vorrichtung zum Positionieren der Gesamtheit der Antriebselemente auf einer Hohlwelle bekannt; auch hierbei erfolgt wiederum nach dem Positionieren aller Antriebselemente das gemeinsame Fügen durch gleichzeitiges Aufweiten der Hohlwelle in den den Antriebselementen zugeordneten Einzelabschnitten. Die Positionierung der Antriebselemente bezüglich der Axial- und Winkelposition erfolgt hierbei mittels elektromagnetischer Kräfte. Im Hinblick auf die magnetischen Eigenschaften der Antriebselemente und der Hohlwelle ist die Genauigkeit dieser Art der Positionierung fragwürdig. Die Vorrichtung, in der die Hohlwelle mit horizontaler Achse gehalten wird, ist einer Automatisierung nur schwierig zu unterziehen.

Aus der EP 0 295 281 B1 sind Verfahren und Vorrichtungen zum Fügen einer Welle der obengenannten Art bekannt, bei denen sämtliche Antriebselemente zunächst auf eine Hohlwelle aufgeschoben werden und die Hohlwelle dann in eine Gesamtvorrichtung eingelegt wird, die für jedes einzelne der Antriebselemente ein teilbares Gesenk bzw. eine teilbare Matrize aufweist, und die das entsprechende Element in einer vorbestimmten Axial- und Winkelposition gegenüber der Hohlwelle bzw. den übrigen Antriebselementen hält. Es sind hierbei Ausführungen mit horizontaler Lage der Achse und vertikaler Lage der Achse vorgesehen. Diese Vorrichtungen sind Automatisierungsprozessen schwer zugänglich, im übrigen sind sie bezüglich des Einsatzes für Wellen unterschiedlicher Konstruktionen außerordentlich ungeeignet, da zu jedem Wellentyp ein eigener Satz von Gesenkeinsätzen erforderlich ist und die Gesamtvorrichtung bezüglich der Axialpositionen der einzelnen teilbaren Gesenke neu eingerichtet werden muß.

Den vorstehend genannten Verfahren sind die Nachteile gemeinsam, daß an der Sonde aufgrund der Mehrzahl der Wirkabschnitte die Fehlermöglichkeit erhöht ist, wobei es zunächst nicht einfach ist, eine Fehlerquelle sofort zu identifizieren. Ergibt sich aus dem hydraulischen Druckverlauf beim Betätigen der Sonde eine Fehlfunktion, so ist die gesamte Welle als Ausschußteil anzusehen.

Sofern die Bedingung gestellt wird, unterschiedliche Einzelabschnitt der Hohlwelle mit unterschiedlichen hydraulischen Drücken zu beaufschlagen, beispielsweise für einen Stirnradflansch einerseits und für Nocken andererseits, so ist dies nur mit einer außerordentlich komplizierten Sondenkonstruktion darstellbar.

Der unvermeidliche Verschleiß der Ringdichtungen an der Sonde, die paarweise die Wirkabschnitte begrenzen, führt in relativ geringen Zeitabschnitten zu der Notwendigkeit einer komplizierten Neubestückung der verwendeten Sonde mit Ringdichtungen.

Hiervon ausgehend liegt der vorliegenden Erfindung die Aufgabe zugrunde, ein Verfahren und eine Vorrichtung bereitzustellen, die bei vereinfachtem Vorrichtungsaufbau für eine weitgehend automatisierte Verfahrensführung geeignet sind. Diese Aufgabe wird durch die Merkmale des Anspruchs 1 oder 9 gelöst. Die Lösung hierfür besteht in einem Verfahren, das sich dadurch auszeichnet, daß die Aufbauteile und das Rohr jeweils einzeln zueinander positioniert und fixiert werden und das Rohr sequentiell in den den einzelnen Aufbauteilen zugeordneten Einzelabschnitten plastisch aufgeweitet wird, und in einer Vorrichtung, die sich dadurch auszeichnet, daß eine einzige Positionier- und Fixiereinheit für die Aufbauelemente und eine einzige Halteund Positioniervorrichtung für das Rohr vorgesehen sind. Durch diese Verfahrensweise, bei der die Antriebselemente einzeln auf der Hohlwelle positioniert und nacheinander festgelegt werden, vereinfacht sich dementsprechend die Vorrichtung dadurch außerordentlich, daß nur eine einzige Positionier- und Fixiervorrichtung für die Antriebselemente erforderlich ist, die nacheinander wiederholt bestückt wird. In gleicher Weise vereinfacht sich der Aufbau der Sonde, die nur einen einzigen Wirkabschnitt aufweisen muß. Sofern Wirkabschnitte unterschiedlicher Länge benötigt werden, ist es relativ einfach, hierfür verschiedene Sonden mit jeweils einem Wirkabschnitt vorzusehen, die wechselweise in Position gebracht werden können. Wenn ein Fügevorgang, z. b. aufgrund Undichtigkeiten an der Sonde, nicht den vorgesehen Verlauf bezüglich des Druckaufbaues nimmt, ist der entsprechende Fehler unmittelbar zu lokalisieren und der Fügevorgang zu wiederholen, ohne daß notwendigerweise Ausschuß entsteht.

Nach einem bevorzugten Verfahren ist vorgesehen, daß die Aufbauteile einzeln im Raum positioniert und fixiert werden, daß das Rohr für jedes Aufbauteil in eine zugeordnete bestimmungsgemäße Axial- und Winkelposition gebracht wird und jeweils ein axial dem Aufbauteil zugeordneter Einzelabschnitt des Rohres plastisch aufgeweitet wird. Eine entsprechende Vorrichtung ist hierbei so aufgebaut, daß die Positionier- und Fixiereinheit für die Aufbauteile ortsfest im Raum angeordnet ist und die Halte- und Positioniervorrichtung für das Rohr dem gegenüber axial und drehend in Bezug auf die Rohrachse antreibbar ist. Diese Ausgestaltung hat den wesentlichen Vorteil, daß die Positionier- und Fixiervorrichtung für die Aufbauteile, insbesondere die Nocken, stationär gehalten werden kann und damit gleichzeitig das automatische Bestücken dieser Positionierund Fixiervorrichtung wesentlich erleichtert ist, während alle Relativpositionen der Teile zueinander durch Axial- und Drehbewegungen des Rohres im Raum angesteuert werden können. Die entsprechende Steuerung ist dabei von einer NC-Steuerungseinheit wahrzunehmen. Die relative Lage der Aufbauteile zueinander auf dem Rohr ist hierbei aufgrund identischer Positionierung in der Halte- und Fixiervorrichtung äußert genau. Das Rohr bleibt hierbei während des gesamten Verfahrens in einer unveränderten Aufspannung.

Nach einer ersten Verfahrensführung ist vorgesehen, daß die Fügeschritte für sämtliche Aufbauelemente an einem Rohr in einer einzigen gemeinsamen Vorrichtung (Fügestation) vollzogen werden. Dies gilt insbesondere für die Fertigung von Kleinserien. Bei einer unveränderten Aufspannung des Rohres in einem Spannfutter führt dies zur höchsten Lagegenauigkeit der Aufbauteile zueinander.

Nach einer zweiten Verfahrensführung ist vorgesehen, daß eine Mehrzahl von Vorrichtungen (Fügestationen) vorgesehen sind, wobei in jeder Fügestation nur ein einzelnes Aufbauelement auf das Rohr aufgebracht und gefügt wird. Die Zahl der Fügestationen würde hierbei der Zahl der Aufbauelemente einer Welle entsprechen, wobei in einer Gesamtanlage gegebenenfalls eine Reservestation vorgesehen werden kann. Damit hierbei weiterhin die relative Winkelgenauigkeit gewährleistet wird, muß auch hierbei das Rohr in einer unveränderten Aufspannung bleiben. Es ist hierfür dem Rohr ein Spannfutter zugeordnet, das in jeder der Stationen winkel- und höhengenau mittels entsprechender Spann- und Anschlagflächen am Spannfutter in einer Haltevorrichtung fixiert werden kann.

In bevorzugter Weise hat jede Station eine Werkzeugwechseleinheit, mit der ein mit einem zusätzlichen Aufbauelement bestücktes Rohr gegen ein noch mit dem entsprechenden Aufbauelement zu bestückendes Rohr ausgetauscht wird. Das Übergeben und Spannen findet hierbei wie erwähnt unmittelbar an einem dem Rohr zugeordneten frei übergebbaren Spannfutter statt. Die genannten Werkzeugwechseleinheit wird vorzugsweise an der Halteund Positioniervorrichtung für das Rohr angeordnet werden.

In weiterhin bevorzugter Weise ist vorgesehen, daß Werkstücktransporteinheiten nach Art von Paletten vorgesehen sind, die auf einer Transportbahn von Station zu Station geführt werden und an den einzelnen Stationen mit einem Stopper, der in den Transportweg eingeschoben werden kann, angehalten und mit Spannmitteln lagegenau bezüglich der Position im Transportweg und bezüglich der vertikalen Ausrichtung des Rohres eingespannt werden. Solche Werkstücktransportmittel können bevorzugt auch in einer Einzelstation zur Anwendung kommen, so daß ein Einschleusen und Ausschleusen von Werkstücken in die und aus der Station automatisiert werden kann.

In besonders bevorzugten Weise wird auf den genannten Werkstücktransporteinheiten nach Art von Paletten auch ein vollständiger Satz von Aufbauelementen für eine vollständige Hohlwelle, insbesondere eine Nockenwelle, in einer Matrize mitgeführt, deren Bestückung sich von Station zur Station um ein Aufbauteil reduziert.

Wenn in einer Station nach dem Einfahren und Fixieren einer der Transporteinheiten zunächst auf den Transporteinheiten ein Wechsel eines neueingefahrenen Rohres gegen ein bereits in der Station befindliches mit dem entsprechenden Aufbauteil bestücktes Rohr stattfindet, bleibt das Rohr bzw. die teilbestückte Hohlwelle in jeder Station gegenüber der Transporteinheit, in der sie ursprünglich vor der ersten Station eingesetzt war, um eine Station zurück.

Die Transporteinheiten werden im Gleichtakt von Station zu Station bewegt. Entsprechend erfolgen die Fügeoperationen in allen Stationen im Gleichtakt.

Die Bestückung der Transporteinheiten mit einem vollständigen Bauteilesatz hat den wesentlichen Vorteil, daß die Bestückung für die Gesamtanlage in einer einzigen Bestückungsstation erfolgen kann, wobei dies manuell erfolgen kann, bei großen Serien jedoch eine automatische Bestückung gerechtfertigt ist. Bei manueller Bestückung kann sich an die Bestückungsstation noch eine automatisierte Bestückungskontrollstation anschließen. Die Transporteinheiten laufen bevorzugt auf einer geschlossenen Schleife. Im Anschluß an die letzte Fügestation wird die fertige Hohlwelle ausgeschleust, wobei die Einspannung im Futter vorzugsweise nicht gelöst wird, d. h. das Futter verläßt die Anlage mit der Hohlwelle, um nachfolgende Bearbeitungsschritte wie Richten, Ablängen, Messen gegebenenfalls zu erleichtern, indem das Futter wieder in entsprechenden Aufnahmevorrichtungen in den genannten Arbeitsstationen mit Schnellspannmitteln eingespannt wird.

In bevorzugter Ausgestaltung verlassen die Aufbauelemente im wesentlichen ihre Transportebene von Station zur Station nicht, wenn sie von der genannten Transporteinheit nach Art einer Palette entnommen und in die Positionier- und Fixiereinheit eingelegt werden. Auf diese Weise sind die Transportmittel für die Aufbauelemente in den Stationen so zu vereinfachen, daß sie nur in einer Ebene nach zwei Achsen verfahren werden können. Dies ist dadurch möglich, daß in der Station nur ein Ablegen erforderlich wird, während das Ausheben aus der Station durch die Steuerung der Positioniermittel für das Rohr nach dem Fügen erfolgt.

Besonders vorteilhaft ist es, daß die einzelnen Fügestationen identisch aufgebaut sind und jeweils universell einsetzbar sind. Hierbei sind die Stationen selbstverständlich so zu programmieren, daß in der ersten Fügestation das auf dem Rohr höchstliegende Aufbauelement gefügt wird und so weiter schrittweise absteigend bis zum tiefstliegenden Aufbauelement auf dem Rohr in der letzen Fügestation.

Die Rohraufweitsonde ist bevorzugt zwischen zwei Höhenpositionen verstellbar, wobei beim Einlegen des Aufbauelementes in die Positionier- und Fixiereinheit das freie Sondenende mit dem Wirkabschnitt nach unten zurückgezogen ist und erst anschließend nach dem Einlegen und Fixieren des Aufbauelements wieder mit dem freien Ende so in die Positionier- und Fixiereinheit vorgefahren wird, daß der Wirkabschnitt innerhalb des Aufbauelementes liegt. Um die exakte Axialität am Sondenende hierbei sicherzustellen, wird zum Vorfahren das freie Sondenende vorübergehend in einer spannbaren Führung zentriert, die ein Durchschieben jedoch nicht behindert. Sobald die Sonde in das Aufbauelement eingeschoben ist und innerhalb desselben noch zentriert gehalten ist, wird von oben das untere offene Ende des Rohres abgesenkt, in eine Zentriervorrichtung eingeführt und über das Sondenende geführt. Sobald das Rohr die Sonde umgibt, wird die Sondenfixiervorrichtung geöffnet, so daß das Rohr soweit erforderlich bis unten auf die Sonde aufgeschoben werden kann. Danach wird das Rohr am unteren Ende fest eingespannt, wobei sich die Sonde über die Dichtungsringe beidseits des Wirkabschnittes innerhalb des Rohres zentriert. Das mit pneumatischen Mitteln fixierte Aufbauelement kann sich beim anschließenden hydraulischen Aufweitvorgang radial ausdehnen und dabei auf dem Rohr zentrieren.

Ein bevorzugtes Ausführungsbeispiel der Erfindung ist in den Figuren dargestellt und wird nachstehend beschrieben. Hierin zeigt
Figur 1 eine erfindungsgemäße Fügestation
   a) in Seitenansicht
   b) in Stirnansicht
   c) in Draufsicht;
Figur 2 eine Palette für Aufbauteile mit Rohrhaltevorrichtung als Einzelheit
   a) in Seitenansicht
   b) in Draufsicht;
Figur 3 eine Horizontaltransporteinheit für Aufbauteile als Einzelheit
   a) in Seitenansicht
   b in Draufsicht;
Figur 4 eine Positionier- und Fixiervorrichtung für Aufbauteile als Einzelheit
   a) in Seitenansicht
   b) in Draufsicht;
Figur 5 eine Sondenhaltevorrichtung als Einzelheit in Seitenansicht;
Figur 6 eine Gesamtanlage mit acht einzelnen Fügestationen nach Figur 1 in Draufsicht.
Figur 7 eine erfindungsgemäße Nockenwelle in Teildarstellung
   a) im Längsschnitt
   b) im Querschnitt durch einen Nocken;
Figur 8 einen erfindungsgemäßen Sondenkopf.

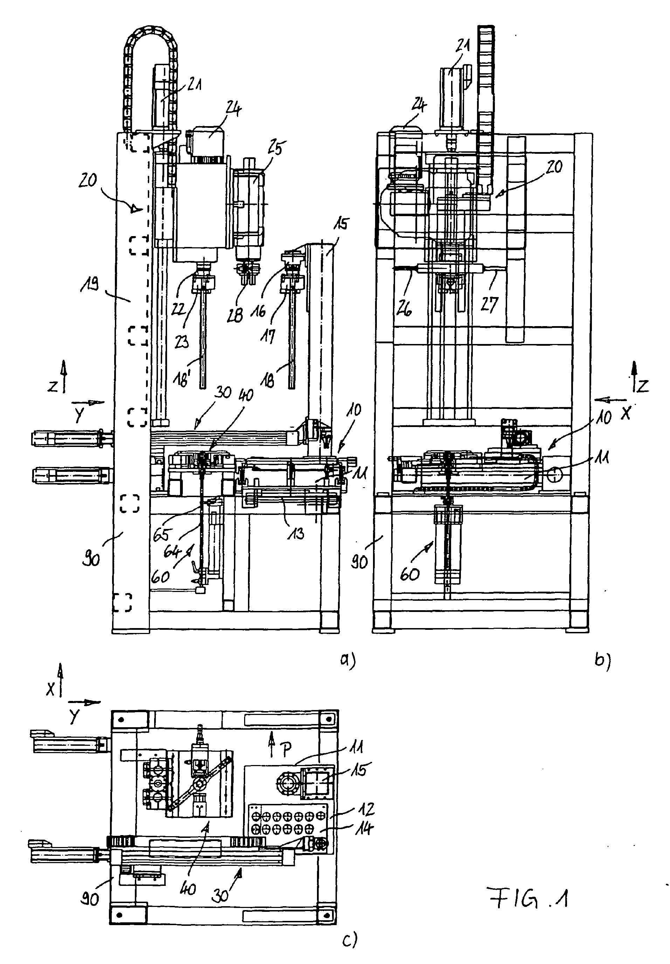

Die drei Darstellungen der Fügestation nach Figur 1 werden nachstehend gemeinsam beschrieben. Drei Bewegungsachsen sind mit x, y, und z bezeichnet. In einem Gestell 90 ist eine in Richtung des Pfeils P horizontal transportable Werkstücktransporteinheit 10, bestehend aus einer Palette 11 und einem Ständer 15, erkennbar, die auf einer Transportbahn 13 läuft, die innerhalb der Vorrichtung verläuft. Die Palette ist innerhalb der Vorrichtung einspannbar. Hier ist insbesondere Möglichkeit gegeben, an der Palette 11 an einer parallel zur Bewegungsrichtung verlaufenden Kante eine Nut und an der gegenüberliegenden parallel zur Transportrichtung verlaufenden Kante zwei Bohrungen vorzusehen, wobei diese Aufnahmemittel von einer Seite durch ein parallel zur Transportrichtung verlaufendes 90°-Prisma und von der anderen Seite durch zwei in der gleichen horizontalen Ebene liegende Kegelzapfen beaufschlagt und eingespannt werden, so daß die Palette 11 in einer exakt horizontal ausgerichteten Lage und in einer exakten Position auf ihrem Transportweg fixiert wird. Auf einer Grundplatte 12 der Palette liegt eine Matrize 14 auf, die der genauen Positionierung eines vollständigen Satzes von Aufbauelementen für eine erfindungsgemäße Nockenwelle dient. Auf der Grundplatte 12 befindet sich ein exakt vertikal ausgerichteter Ständer 15, an dessen oberem Ende eine Halte- und Spannvorrichtung 16 für ein einzelnes Spannfutter 17 befestigt ist. Das Spannfutter 17 hat außen Eingriffsmittel, die eine spielfreie winkelgenaue Position in der Haltevorrichtung 16 bedingen. In dem Spannfutter 17 ist ein Rohr 18 fest eingespannt, wobei es diese fest eingespannte Position im Spannfutter während des ganzen erfindungsgemäßen Fügeverfahrens beibehält.

Am Gestell 90 ist ein weiterer Ständer 19 aufgebaut, in dem eine numerisch gesteuerte Rohrhalte- und Positioniervorrichtung 20 mittels eines Linearantriebsmotors 21 vertikal verfahrbar ist. In der Positioniervorrichtung 20 ist eine Haltevorrichtung 22 für ein weiteres Spannfutter 23 vorgesehen, das mit dem Spannfutter 17 in seiner Art übereinstimmt. Abweichend von der Haltevorrichtung 16 ist die Haltevorrichtung 22 jedoch mit einem numerisch gesteuerten Drehantrieb 24 versehen, der die Haltevorrichtung 22 und damit das Spannfutter 23 in jede Drehstellung innerhalb des Gestells 10 bringen kann. In dem Spannfutter 23 ist ein weiteres Rohr 18' eingespannt. Das Rohr 18' im Spannfutter 23 ist bereits mit einem Aufbauteil bestückt und wird hier gegen das Rohr 18 im Ständer 19 ausgetauscht.

Zwischen den beiden Spannfuttern 17, 23 befindet sich eine an der Positioniervorrichtung 20 befestigte Spannfutterwechselvorrichtung 25, die zwei radial gegenüberliegende Greiferarme 26, 27 und einen Rotationskopf 28 hat. Diese nach Art einer üblichen Werkzeugwechselvorrichtung gebaute Vorrichtung kann durch Drehen des Rotationskopfes um 90° gleichzeitig beide Spannfutter 17, 23 umfassen, die dann aus ihren Halterungen 16, 22 gelöst werden, und durch Weiterdrehen um 180° gegeneinander auswechseln, bis sie von den Haltevorrichtungen 16, 22 wieder übernommen werden. Danach kann der Rotationskopf 28 um 90° zurückdrehen, so daß das in der Position bei 17 gekennzeichnete Rohr durch Weitertransport der Palette 11 und Einfahren einer weiteren Palette gegen ein anderes Rohr ausgewechselt werden kann und an dem in der Position bei 23 befindlichen Rohr für die eine Fügeoperation notwendigen Schritte und Bewegungsabläufe durchgeführt werden können. Auf dem Gestell befindet sich weiterhin eine Horizontaltransportvorrichtung 30 mit einem dreifingrigen Greifer 32, der eine erste Führung 33 für einen Wagen 31 mit dem Greifer 32 quer zur Transportrichtung hat, die an einem Schlitten 34 befestigt ist, sowie eine Führung 35 für den Schlitten 34 in Transportrichtung hat. Der Greifer 32 hat seinerseits noch eine vertikale Führung 36. Mit dem Greifer 32 und den entsprechenden Führungsmitteln, die zuvor genannt worden sind, können einzelne Aufbauelemente numerisch gesteuert aus der Halterung in der Matrize 14 entnommen und in eine Positionier- und Fixiervorrichtung 40 verbracht werden, deren Mitte unterhalb der Achse des Spannfutters 23 liegt. Unterhalb der Fixiervorrichtung 40 liegt eine Sondenhalterung- und Verschiebeeinheit 60, in der eine hydraulische Druckmittelsonde 64 gehalten ist und die axial in zwei Positionen verfahren werden kann. Die Vorrichtung weist weiterhin eine Greifereinheit 65 auf, mit der die Sonde 64 kurzfristig beim Aufschieben eines Rohres fixiert werden kann. Dieser Greifer 65 wird jedoch sofort wieder geöffnet, damit je nach beabsichtigter Lage des Aufbauelements auf dem Rohr letzteres bis weit über die Sonde 64 nach unten gefahren werden kann. Zum Einlegen eines Aufbauelements in die Fixiervorrichtung 40 wird die Sonde 64 axial in ihre tiefere Position gefahren, damit das Einlegen nicht behindert wird, anschließend und vor dem Absenken des Rohres wird die Sonde 64 in ihre zweite höher liegende Position gefahren, wobei der Wirkabschnitt der Sonde innerhalb des Aufbauelements zu liegen kommt.

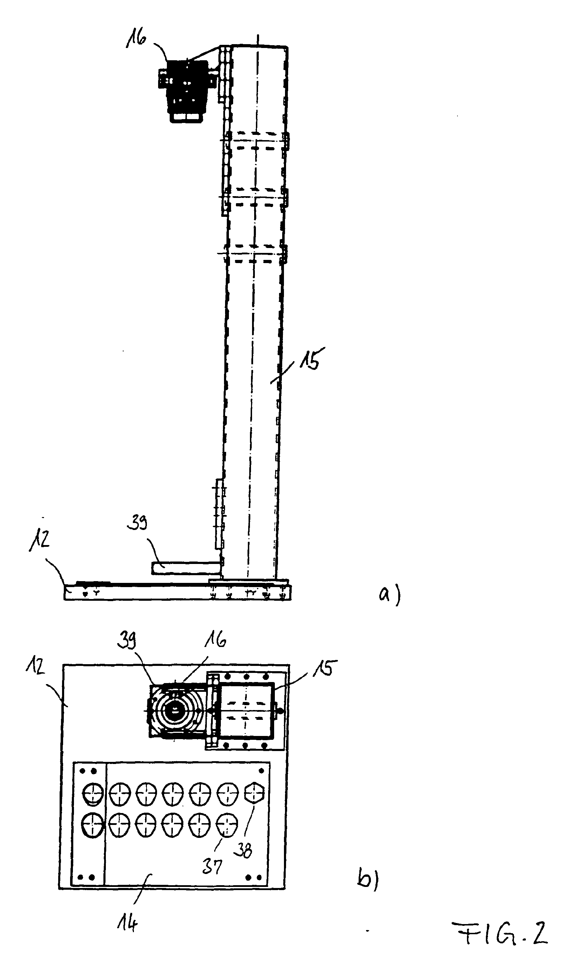

Die beiden Darstellungen der Figur 2 werden nachstehend gemeinsam beschrieben. Es ist als vergrößerte Einzelheit die Werkstücktransporteinheit 10 mit Palettengrundplatte 12, darauf aufgeschraubter Matrize 14, auf der Grundplatte ebenfalls aufgeschraubtem Ständer 15 sowie mit am Ständer angebrachter Haltevorrichtung 16 für ein Spannfutter erkennbar. In der Matrize sind zwölf Ausnehmungen 37, in die einzelne Nocken mit grob übereinstimmender Winkellage eingesetzt werden können, sowie eine Sechskantenausnehmung 38, in die beispielsweise eine zylindrische Lagerhülse eingesetzt werden kann, erkennbar. Diese verschiedenen Ausnehmungen 37, 38 können numerisch gesteuert vom zuvor genannten Greifer 32 angesteuert werden. Unter der Halterung 16 befindet sich eine Ölauffangschale 39, die aus der bereits mit zumindest einem Aufbauelemente bestückten Rohr abtropfendes Öl auffangen kann, damit dieses nicht verschleppt wird oder auf die Transportmittel gelangt. Die Halterung 16 ist wie bereits erwähnt so eingerichtet, daß das Spannfutter 17 genau drehwinkelpositioniert und rechtwinklig gegenüber der Grundplatte 12 und damit bei eingespannter Palette 11 gegenüber dem Gestell 90 gehalten werden kann.

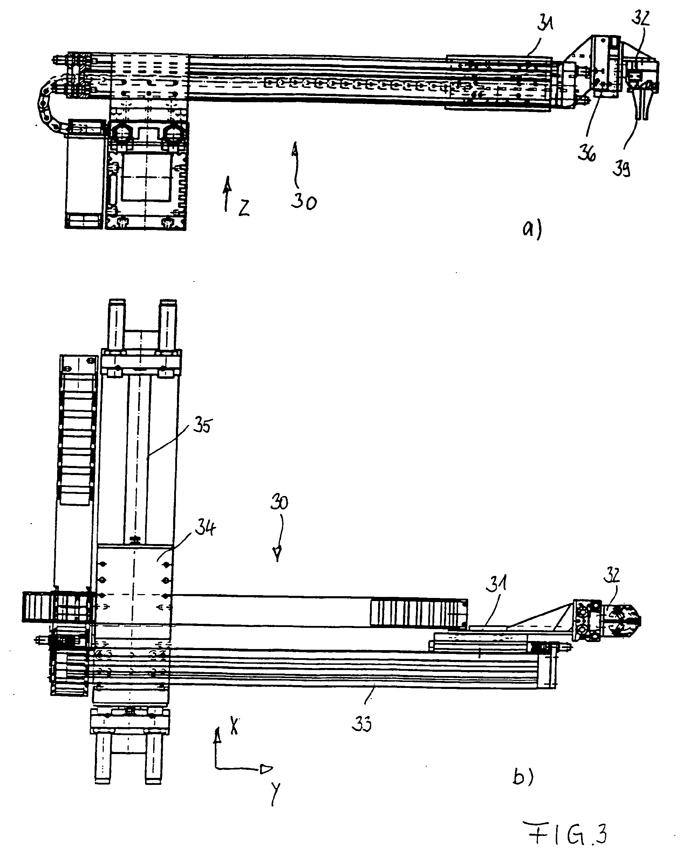

Die beiden Darstellungen der Figur 3 werden nachfolgend gemeinsam beschrieben. Hier ist ein Greiferkopf 32 gezeigt, der an einem Wagen 31 angeordnet ist, der auf einer Schiene 33 in Richtung der Y-Achse verfahrbar ist. Die Schiene 33 ist in einem Schlitten 34 gehalten, der seinerseits auf einer Schlittenführung 35 längst der X-Achse verfahrbar ist. Der Greiferkopf 32 ist seinerseits in einer Führung 36 am Wagen 31 in Richtung der Z-Achse verfahrbar. Der Greifer 32 weist drei radial verstellbare Finger 39 auf. Auf die Höhenverstellbarkeit des Greiferkopfes in Richtung der Z-Achse kann gegebenenfalls verzichtet werden, wenn sich die Finger 39 so weit öffnen lassen, daß sie sich den Aufbauteilen seitlich nähern und diese dann mittig einschließen und ergreifen können.

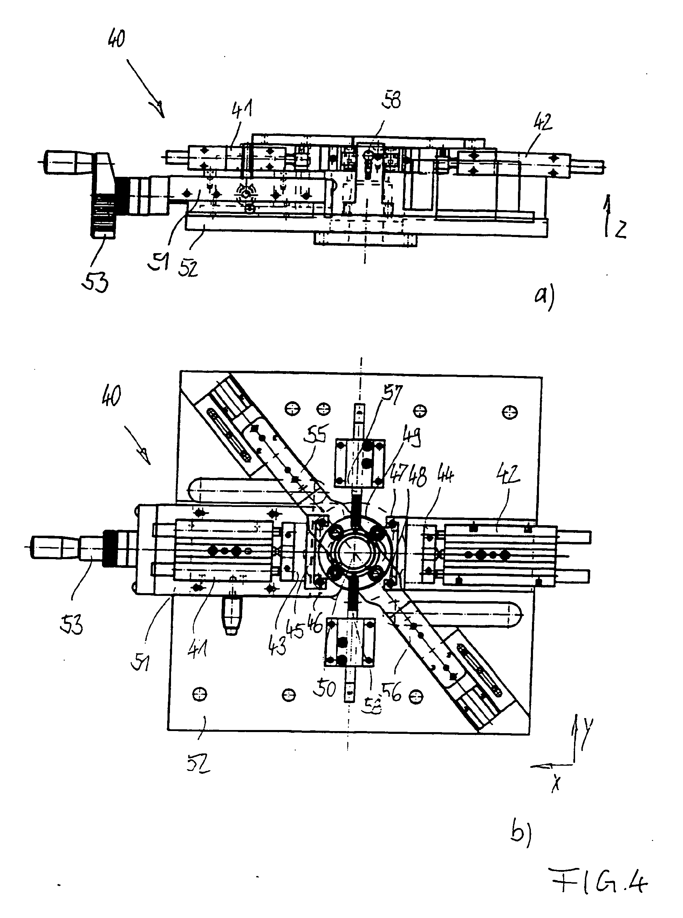

Die beiden Darstellungen der Figur 4 werden nachstehend gemeinsam beschrieben. Die in Figur 1 nur gesamtheitlich bezeichnete Positionier- und Fixiervorrichtung 40 umfaßt eine Grundplatte 52, auf der mehrere pneumatische Spanner und Halter aufgebaut sind. Ein erstes Paar Zylindergehäuse 41, 42 mit Spannbacken 43, 44 dient dem Festhalten und Fixieren eines der Aufbauteile, insbesondere eines Nockens. Hierbei sind an den vorderen Enden der Backenpaare Rollen 45, 46, 47, 48 vorgesehen, die senkrechte Rollenachsen haben, so daß sich ein auf eine Ringscheibe 49 aufgelegter Nocken beim Schließen der Spannbacken 43, 44 auf die Achse 50 zentriert. Das Zylindergehäuse 41 der Spannbacke 43 ist mittels eines Schlittens 51 gegenüber der Platte 52 in Richtung der X-Achse verstellbar. Hierzu dient eine Stellkurbel 53. Demgegenüber ist das Zylindergehäuse 42 der Spannbacke 44 fest auf der Grundplatte 52 installiert. Die Zylindereinheit 41 wirkt mit einem höheren pneumatischen Druck als die Zylindereinheit 42, so daß die Backe 43 einen Festanschlag und die Backe 44 einen elastischen Anschlag darstellt. Sobald ein Nocken auf die Scheibe 49 aufgelegt ist und weitgehend auf die Achse 50 zentriert ist, werden zwei Spannbacken 55, 56 mit Halbrundausnehmungen nach vorne aufeinander zugefahren, deren Halbrundausnehmungen oben angefast sind. Die hierdurch gebildete konische Einführöffnung dient beim anschließenden Absenken des Rohres dem exakten Einfädeln des Rohres in die Durchgangsöffnung des Aufbauteils, insbesondere des Nockens. Sobald das Rohr eingefahren und fixiert ist und noch bevor der Vorgang des folgenden Aufweitens des im Aufbauteil einliegenden Rohrabschnittes beginnt, werden zwei Meßtaster 57, 58 in Kontakt mit dem Aufbauteil gebracht, um während des Aufweitens dessen Verformung über dem Zeitverlauf aufzunehmen. Hierbei ist zu beachten, daß einerseits ein zulässiges Maß der elastischen Verformung nicht überschritten werden darf, damit Rißbildungen im Aufbauteil ausgeschlossen werden können, andererseits muß die bleibende elastische Verformung so groß sein, daß von einer ausreichend großen plastischen Verformung des Rohrabschnittes ausgegangen werden kann, die einen Festsitz des Aufbauteils garantiert.

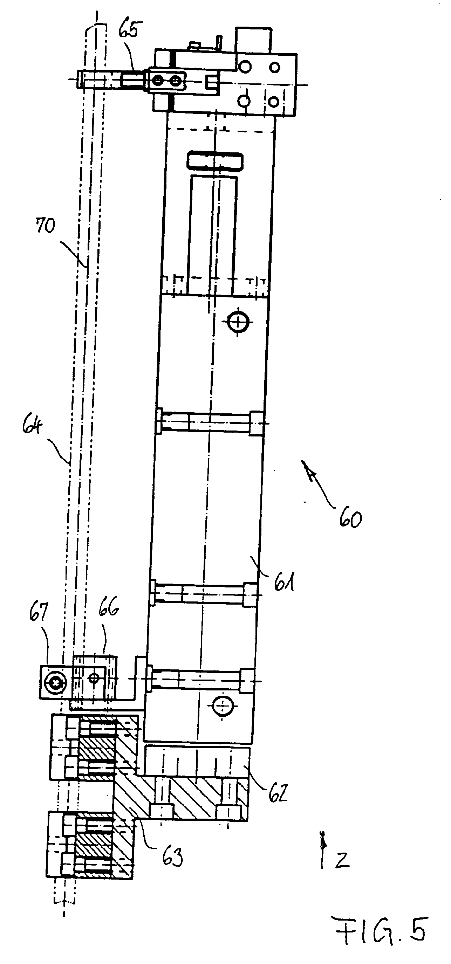

In Figur 5 ist die Sondenhalterung und -führung 60 in gleicher Ansicht wie in Figur 1a gezeigt. In einem Zylindergehäuse 61 befindet sich ein in Richtung der Z-Achse verfahrbarer Stellzylinder 62, der zwischen einer oberen dargestellten und einer zweiten unteren Position verstellbar ist. An dem Stellzylinder 62 befindet sich eine Einspannvorrichtung 63, in der ein nur gestrichelt dargestellter Sondenkörper 64 eingespannt ist. An den unten abgebrochenen Sondenkörper 64 schließt sich unten eine Druckmittelversorgung für Hydraulikmedium an, während am ebenfalls abgebrochenen oberen Ende ein axial begrenzter Wirkabschnitt anschließt, der zwischen zwei Ringdichtungen eine Austrittsöffnung für Hydraulikmedium hat. Am oberen Ende des Gehäuses befindet sich eine einstellbare Einspannvorrichtung 65, die die Sondenachse 70 genau auf die zuvor genannte Achse 50 der Positionier- und Fixiereinheit 40 zentriert, ohne dabei die Axialverschieblichkeit der Sonde zwischen den beiden genannten Positionen zu behindern. Die Spannvorrichtung 65 öffnet sich sofort, sobald der Wirkbereich der Sonde in das Aufbauteil eingeführt ist und bevor das Rohr anschließend von oben über das Sondenende aufgeschoben und in die Durchgangsöffnung des Aufbauteils eingeführt wird. Am unteren Ende des Gehäuses befindet sich ein Lichtschrankenelement 66, das mit einem entsprechenden Reflektor 67, der auf dem Sondenkörper 64 befestigt ist, so zusammenwirkt, daß es sofort zu einem Funktionsstop kommt, sofern der Sondenkörper von einem nicht korrekt aufgefädelten Rohr fehlerhafterweise nach unten verschoben wird.

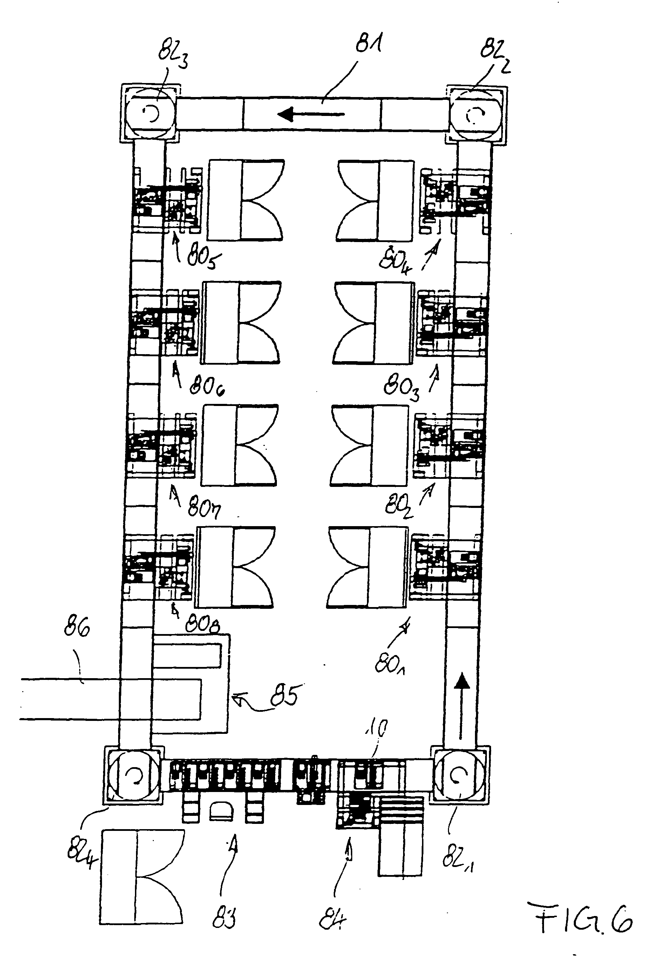

In Figur 6 ist in Draufsicht eine Anlage mit sechs vollständigen Fügestationen 80 gezeigt, die innerhalb eines endlosen rechteckigen Förderbahnsystems 81 liegen, das an den jeweiligen Eckpunkten Drehstationen 82 hat. Das Förderbahnsystem kann aus Bandförderern oder Rollenbahnen bestehen. An einer der kürzeren Stirnseiten des Bahnsystems 81 liegt eine Bestükkungsstation 83, in der Werkstücktransporteinheiten mit einem vollständigen Satz von Aufbauteilen sowie mit einem in ein Spannfutter eingespannten Rohr bestückt werden. Gemäß der Darstellung kann es sich um eine Station zur manuellen Bestückung handeln, eine Automatisierung ist jedoch ohne weiteres möglich. Auf dem gegen den Uhrzeigersinn verlaufenden Transportweg schließt sich eine Station 84 zur Beschickungsprüfung an, die bevorzugt automatisiert funktioniert. Eine Anzahl der Werkstücktransporteinheiten 10 ist vor der Bestückungsstation und der Bestückungsprüfungsstation angedeutet. Nach dem Drehen in einer der Drehstationen 82 fährt eine Werkstücktransporteinheit die Reihe der ersten vier Fügestationen ab, die in den Transportweg integriert sind. In jeder der Fügestationen 80₁ bis 80₄ wird das Rohr über den Werkzeugwechsler eingewechselt, mit einem ersten bzw. einem zusätzlichen Aufbauteil bestückt und über den Werkzeugwechsler wieder in die gleiche oder die nächstfolgende Werkstücktransporteinheit 10 zum Weitertransport eingestellt. Nach dem Quertransport über die zwei nächsten Drehstationen 82₂, 82₃ wird das Rohr in vier weiteren Fügestationen 80₅ bis 80₈ mit jeweils einem zusätzlichen Aufbauteil bestückt. Es ist auch möglich, daß in den einzelnen Stationen z.B. Paare von Aufbauteilen mit gleicher Drehwinkelposition zum Rohr unmittelbar nacheinander gefügt werden. In einer Station 85 zum Ausschleusen schließlich wird die fertigbestückte und gefügte Nockenwelle aus der Anlage entnommen und auf ein Übergabeband 86 gesetzt. Die leeren Werkstücktransporteinheiten 10 werden über eine vierte Drehstation 82₄ schließlich wieder der Bestückungsstation 83 zugeführt.

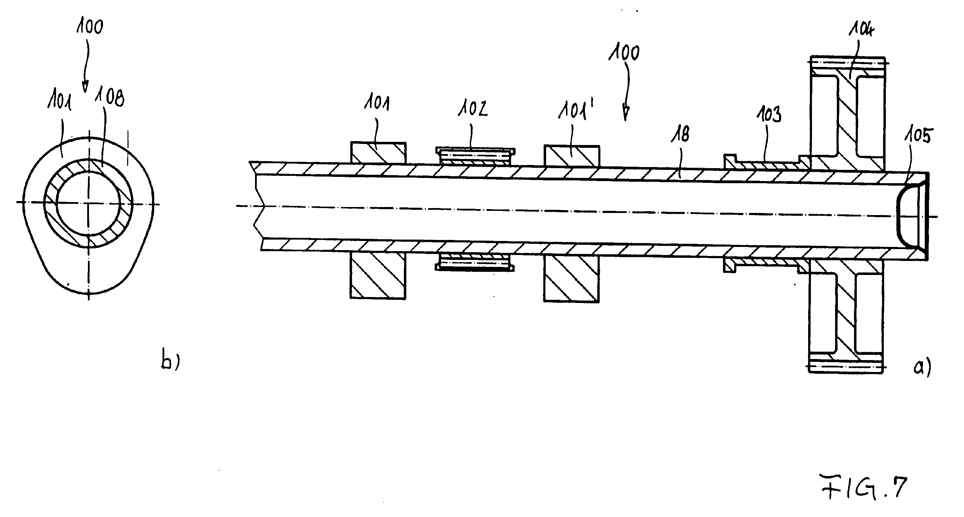

In Figur 7 ist ein Teil einer erfindungsgemäßen Nockenwelle 100 dargestellt. Hierbei sind auf einem Rohrkörper 18 zwei Nocken 101, 101' in gleicher Umfangslage nach dem erfindungsgemäßen Verfahren festgelegt. Zwischen diesen ist ein Nadellager 102 lose aufgeschoben. Am Ende der Welle befinden sich ein Gleitlager 103 und ein Zahnrad 104, die nach dem erfindungsgemäßen Verfahren festgelegt sind. In das offene Ende der Welle ist ein Deckel 105 eingesetzt. Die Aufbauteile 101, 101', 103 und 104 sind jeweils nacheinander aufgeschoben und durch plastisches Umformen des Rohres 18 festgelegt worden.

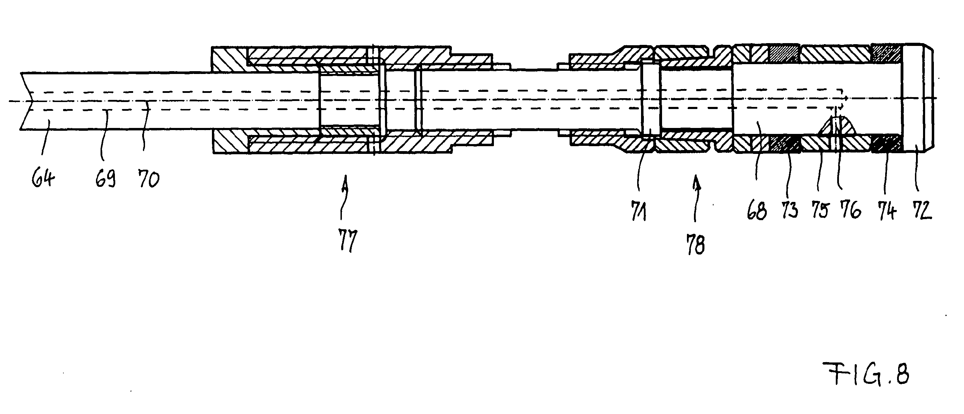

Figur 8 zeigt das obere Ende des Sondenkörpers 64 mit einem angeschraubten Sondenkopf 68; beide werden von einer Innenbohrung 69 mit der Achse 70 durchsetzt. Diese Bohrung 69 endet im Sondenkopf 68 als Sackbohrung. Zwischen zwei Bundabschnitten 71, 72 auf dem Sondenkopf 68 sitzen mehrere Hülsen, die ein Paar Ringdichtungen 73, 74 fixieren, die von einer Abstandshülse 75 auf Distanz gehalten werden. Die Länge der Hülse 75 definiert den Wirkbereich der Sonde. Eine radiale Bohrung 76 geht von der zentralen Bohrung 69 aus und durchsetzt dabei die Hülse 75. Durch diese radiale Bohrung fließt hydraulisches Druckmittel in den durch die Ringdichtungen 73, 74 innerhalb eines Rohres abgedichteten Wirkbereich. Sondenkörper 64 und Sondenkopf 68 sind durch Schraubverbindungsmittel 77 miteinander verbunden. Die Hülse 75 und die Ringdichtungen 73, 74 sind durch Schraubspannmittel 78 gegen den Bund 72 verspannt.

Bezugszeichenliste
- 10: Werkstücktransporteinheit
- 11: Palette
- 12: Grundplatte
- 13: Transportmittel
- 14: Matrize
- 15: Ständer
- 16: Haltevorrichtung
- 17: Spannfutter
- 18: Rohr
- 19: Ständer
- 20: Rohrhalte- und Positioniervorrichtung
- 21: Linearantriebsmotor
- 22: Haltevorrichtung
- 23: Spannfutter
- 24: Drehantriebsmotor
- 25: Werkzeugwechsler
- 26: Greifarm
- 27: Greifarm
- 28: Drehkopf
- 29 30: Horizontaltransporteinheit
- 31: Wagen
- 32: Greifer
- 33: Querführung
- 34: Schlitten
- 35: Längsführung
- 36: Höhenführung
- 37: Ausnehmung
- 38: Ausnehmung
- 39: Ölauffangschale
- 40: Positionier- und Fixiereinheit
- 41: Zylindergehäuse
- 42: Zylindergehäuse
- 43: Haltebacke
- 44: Haltebacke
- 45: Rolle
- 46: Rolle
- 47: Rolle
- 48: Rolle
- 49: Tragring
- 50: Achse
- 51: Schlitten
- 52: Grundplatte
- 53: Kurbel
- 54 55: Greifer
- 56: Greifer
- 57: Taster
- 58: Taster
- 60: Sondenhalte- und Führungseinheit
- 61: Zylindergehäuse
- 62: Stellkolben
- 63: Klemmvorrichtung
- 64: Sondenkörper
- 65: Greifvorrichtung
- 66: Lichtschrankeneinheit
- 67: Reflektor
- 68: Sondenkopf
- 69: Innenbohrung
- 70: Sondenachse
- 71: Bund
- 72: Bund
- 73: Ringdichtung
- 74: Ringdichtung
- 75: Distanzhülse
- 76: Radialbohrung
- 77: Schraubverbindungsmittel
- 78: Schraubspannmittel
- 80: Fügestation
- 81: Transportschleife
- 82: Drehstation
- 83: Bestückungsstation
- 84: Prüfstation
- 85: Ausschleusstation
- 86: Förderband
- 90: Gestell

## Patentansprüche

1. Verfahren zum Fügen von gebauten Hohlwellen, die aus einem Rohr und auf dieses aufgeschobenen Aufbauteilen wie Nokken, Flanschen, Lagerhülsen, Impulsgebern, Zahn- oder Kettenrädern bestehen, wobei das Rohr innerhalb der Aufbauteile in Einzelabschnitten durch innere Druckaufgabe so radial plastisch aufgeweitet wird, daß die Aufbauteile im bleibenden Preßsitz auf dem Rohr festgelegt werden,
**dadurch gekennzeichnet,**
**daß** die Aufbauteile und das Rohr jeweils einzeln zueinander positioniert und fixiert werden und das Rohr sequentiell in den den einzelnen Aufbauteilen zugeordneten Einzelnabschnitten plastisch aufgeweitet wird.

2. Verfahren nach Anspruch 1,
**dadurch gekennzeichnet,**
**daß** die Aufbauteile einzeln im Raum positioniert und fixiert werden, daß das Rohr für jedes Aufbauteil in eine zugeordnete bestimmungsgemäße Axial- und Winkelposition gebracht wird und jeweils ein axial dem Aufbauteil zugeordneter Einzelabschnitt des Rohres plastisch aufgeweitet wird.

3. Verfahren nach einem der Ansprüche 1 oder 2,
**dadurch gekennzeichnet,**
**daß** die Aufbauteile für ein Rohr sequentiell in einer bezüglich ihrer Mittelachse und einer Auflagefläche übereinstimmenden Position im Raum positioniert und fixiert und auf dem Rohr festgelegt werden.

4. Verfahren nach einem der Ansprüche 1 oder 2,
**dadurch gekennzeichnet,**
**daß** verschiedene Aufbauteile für ein Rohr in bezüglich ihrer Mittelachsen unterschiedlichen parallel zueinander versetzten Positionen im Raum positioniert und fixiert werden und sequentiell auf dem Rohr festgelegt werden.

5. Verfahren nach einem der Ansprüche 1 bis 4,
**dadurch gekennzeichnet,**
**daß** das Rohr und die Aufbauteile mit vertikalen Mittelachsen bewegt und positioniert werden.

6. Verfahren nach einem der Ansprüchen 1 bis 5, bei dem das Rohr mittels eines Sondenkörpers in den Aufbauelementen zugeordneten Einzelabschnitten aufgeweitet wird,
**dadurch gekennzeichnet,**
**daß** jeweils ein Aufbauteil im Raum positioniert und fixiert wird, daß der Sondenkörper aus einer axial zurückgezogenen Position in eine Position innerhalb des Aufbauteils eingefahren wird und daß das Rohr über den Sondenkörper und in das Aufbauteil eingeführt wird und in eine bestimmungsgemäße Axial- und Winkelposition gegenüber dem Aufbauteil zum Aufweiten eines dem Aufbauteil zugeordneten Einzelabschnitts gebracht wird.

7. Verfahren nach einem der Ansprüche 1 bis 6,
**dadurch gekennzeichnet,**
**daß** das Rohr während des Fügens sämtlicher Aufbauteile unmittelbar in einer unveränderten Aufspannung gehalten wird.

8. Verfahren nach einem der Ansprüche 1 bis 7,
**dadurch gekennzeichnet,**
**daß** sämtliche Aufbauteile für ein Rohr zum Fügen in im wesentlichen übereinstimmender Höhenlage im Raum positioniert und fixiert werden.

9. Vorrichtung zum Fügen von gebauten Hohlwellen, die aus einem Rohr und auf dieses aufgeschobenen Aufbauteilen wie Nocken, Flanschen, Lagerhülsen, Impulsgebern, Zahn- oder Kettenrädern bestehen, wobei das Rohr innerhalb der Aufbauteile in Einzelabschnitten durch innere Druckaufgabe so radial plastisch aufgeweitet wird, daß die Aufbauteile im bleibenden Preßsitz auf dem Rohr festgelegt werden,
**dadurch gekennzeichnet,**
**daß** eine einzige Positionier- und Fixiereinheit (40) für die Aufbauelemente und eine einzige Halte- und Positioniervorrichtung (20) für das Rohr vorgesehen sind, wodurch die Aufbauteile und das Rohr jeweils einzeln zueinander positioniert und fixiert werden und das Rohr sequentiell in den den einzelnen Aufbauteilen zugeordneten Einzelnabschnitten plastisch aufgeweitet wird.

10. Vorrichtung nach Anspruch 9,
**dadurch gekennzeichnet,**
**daß** die Positionier- und Fixiereinheit (40) ortsfest im Raum angeordnet ist und die Halte- und Positioniervorrichtung (20) demgegenüber axial und drehend in Bezug auf die Rohrachse antreibbar ist.

11. Vorrichtung nach einem der Ansprüche 9 oder 10,
**dadurch gekennzeichnet,**
**daß** die Achse der Halte- und Positioniervorrichtung (20) für das Rohr und die Halteachse der Positionier- und Fixiereinheit (40) vertikal ausgerichtet sind.

12. Vorrichtung nach einem der Ansprüche 9 bis 11 mit einem Sondenkörper zum Aufweiten von Einzelabschnitten des Rohres,
**dadurch gekennzeichnet,**
**daß** der Sondenkörper (64) einen einzigen Wirkabschnitt zum Aufweiten eines Einzelabschnittes des Rohres (18) aufweist.

13. Vorrichtung nach Anspruch 12,
**dadurch gekennzeichnet,**
**daß** der Sondenkörper (64) zwischen zwei axialen Positionen verstellbar ist, wobei der Wirkabschnitt in einer unteren Position unterhalb der Positionier- und Fixiereinheit (40) liegt und in einer oberen Position innerhalb der Positionier- und Fixiereinheit (40) liegt.

14. Vorrichtung nach einem der Ansprüche 9 bis 12,
**dadurch gekennzeichnet,**
**daß** die Halte- und Positioniervorrichtung (20) eine Wechselaufnahme (22) für ein Spannfutter (17, 23) für ein Rohr aufweist.

15. Vorrichtung nach Anspruch 14,
**dadurch gekennzeichnet,**
**daß** eine Werkstücktransporteinheit (10) eine Wechselaufnahme (16) für ein Spannfutter (17, 23) für ein Rohr aufweist.

16. Vorrichtung nach Anspruch 15,
**dadurch gekennzeichnet,**
**daß** die Werkstücktransporteinheit (10) eine Matrize für einen vollständigen Satz von Aufbauteilen für ein Rohr aufweist.

17. Vorrichtung nach Anspruch 14 und 15,
**dadurch gekennzeichnet,**
**daß** eine Werkzeugwechselvorrichtung (25) zur Handhabung von Spannfuttern (17, 23) insbesondere an der Halte- und Positioniervorrichtung (20) angeordnet vorgesehen ist.

18. Vorrichtung nach einem der Ansprüche 9 bis 17,
**dadurch gekennzeichnet,**
**daß** eine Transportbahn (13) und Spannmittel für eine Werkstücktransporteinheit (10) innerhalb der Vorrichtung angeordnet sind.

19. Vorrichtung nach einem der Ansprüche 9 bis 18,
**dadurch gekennzeichnet,**
**daß** eine Horizontaltransportvorrichtung (30) zum Aufnehmen und Überführen einzelner Aufbauteile aus einer Bereitstellungsposition in die Positionier- und Fixiereinheit (40) vorgesehen ist.

20. Anlage aus mehreren Vorrichtungen nach einem der Ansprüche 9 bis 19, wobei jede Vorrichtung eine Fügestation bildet,
**dadurch gekennzeichnet,**
**daß** die einzelnen Stationen (80) über einen Transportweg (81) untereinander linear oder in einer Schleife verbunden sind, daß von Station zu Station transportable Werkstücktransporteinheiten (10) vorhanden sind, die Aufnahmemittel (16) für ein Spannfutter für ein Rohr aufweisen und daß Halte- und Positioniervorrichtungen (20) der Stationen ebenfalls Aufnahmemittel (22) für ein Spannfutter für ein Rohr aufweisen.

## Claims

1. A method of joining constructed hollow shafts which consist of a tube and attachable parts slid on to said tube, such as cams, flanges, bearing sleeves, pulse generators, gearwheels or chain wheels, wherein the tube inside the attachable parts, in individual portions, is radially plastically expanded by the application of internal pressure in such a way that the attachable parts are secured by a permanent press fit on the tube,
**characterised in**
**that** the attachable parts and the tube are individually positioned and fixed relative to one another and that the tube, sequentially, is plastically expanded in the individual portions associated with the individual attachable parts.

2. A method according to claim 1,
**characterised in**
**that** the attachable parts are individually positioned and fixed in space, that the tube, for each attachable part, is moved into an associated specified axial and angular position and that an individual portion of the tube axially associated with the attachable part is plastically expanded.

3. A method according to any one of claims 1 or 2,
**characterised in**
**that** the attachable parts for a tube are sequentially positioned and fixed in space in positions which correspond to one another with reference to their central axes and a respective contact face, and secured on the tube.

4. A method according to any one of claims 1 or 2,
**characterised in**
**that** different attachable parts for a tube are positioned and fixed in space in different positions which are offset relative to one another in parallel relative to their central axes, and sequentially secured on the tube.

5. A method according to any one of claims 1 to 4,
**characterised in**
**that** the tube and the attachable parts are moved and positioned with vertically aligned central axes.

6. A method according to any one of claims 1 to 5, wherein the tube is expanded by a probe member in individual portions associated with the attachable elements,
**characterised in**
**that** each attachable part is positioned and fixed in space, that the probe member is moved from an axially withdrawn position into a position inside the attachable part and that the tube is guided over the probe member and into the attachable part and moved into a specified axial and angular position relative to the attachable part for the purpose of expanding an individual portion associated with the attachable part.

7. A method according to any one of claims 1 to 6,
**characterised in**
**that**, while all the attachable parts are being joined, the tube is held directly in an unchanged clamping position.

8. A method according to any one of claims 1 to 7,
**characterised in**
**that** all the attachable parts for a tube are positioned and fixed in space for the purpose of being joined at substantially corresponding elevations.

9. A device for joining constructed hollow shafts which consist of a tube and attachable parts slid on to said tube, such as cams, flanges, bearing sleeves, pulse generators, gearwheels or chain wheels, wherein the tube inside the attachable parts, in individual portions, is radially plastically expanded by the application of internal pressure in such a way that the attachable parts are secured by a permanent press fit on the tube,
**characterised in**
**that** there are provided one single positioning and fixing unit (40) for the attachable elements and one single holding and positioning device (20) for the tube, by means of which the attachable parts and the tube are individually positioned and fixed relative to one another, with the tube being sequentially plastically expanded in the individual portions associated with the individual attachable parts.

10. A device according to claim 9,
**characterised in**
**that** the positioning and fixing unit (40) is fixed in space and that the holding and positioning device (20), relative thereto, is axially and rotatingly drivable with reference to the tube axis.

11. A device according to any one of claims 9 or 10,
**characterised in**
**that** the axis of the holding and positioning device (20) for the tube and the holding axis of the positioning and fixing device (40) are aligned vertically.

12. A device according to any one of claims 9 to 11, having a probe member for expanding individual portions of the tube,
**characterised in**
**that** the probe member (64) comprises one single effective portion for expanding an individual portion of the tube (18).

13. A device according to claim 12,
**characterised in**
**that** the probe member (64) is adjustable between two axial positions, wherein the effective portion is arranged in a lower position underneath the positioning and fixing unit (40) and in an upper position inside the positioning and fixing unit (40).

14. A device according to any one of claims 9 to 12,
**characterised in**
**that** the holding and positioning device (20) comprises exchangeable receiving means (22) for a chuck (17, 23) for a tube.

15. A device according to claim 14,
**characterised in**
**that** a workpiece transporting unit (10) comprises exchangeable receiving means (16) for a chuck (17, 23) for a tube.

16. A device according to claim 15,
**characterised in**
**that** the workpiece transporting unit (10) comprises a die for a complete set of attachable parts for a tube.

17. A device according to claim 14, and 15,
**characterised in**
**that** there is provided a workpiece exchanging device (25) for handling chucks (17, 23), more particularly so as to be arranged at the holding and positioning device (20).

18. A device according to any one of claims 9 to 17,
**characterised in**
**that** a transport track (13) and clamping means for a workpiece transporting unit (10) are arranged with in the device.

19. A device according to any one of claims 9 to 18,
**characterised in**
**that** there is provided a horizontal transporting device (30) for receiving and transferring individual attachable parts from a supply position into the positioning and fixing unit (40).

20. A plant consisting of a plurality of devices according to any one of claims 9 to 19, wherein each device constitutes a joining station,
**characterised in**
**that** the individual stations (80) are connected to one another linearly or in a loop via a transport path, that there are workpiece transporting units (10) available transportable from station to station which units comprise receiving means (16) for a chuck for a tube and that holding and positioning devices (20) of the stations also comprise receiving means (22) for a chuck.

## Revendications

1. Procédé pour l'assemblage d'un arbre creux portant des équipements, constitué par un tube et par des pièces d'équipement enfilées sur celui-ci, comme des cames, des brides, des douilles de palier, des générateurs d'impulsions, des roues dentées ou des engrenages, dans lequel le tube en place à l'intérieur des pièces d'équipement est élargi plastiquement radialement par tronçons individuels au moyen de l'application d'une pression intérieure de telle façon que les pièces d'équipement sont immobilisées sur le tube avec assemblage serré permanent,
**caractérisé en ce que** les pièces d'équipement et le tube sont positionnés et fixés respectivement individuellement les uns par rapport aux autres, et le tube est élargi plastiquement séquentiellement dans les tronçons individuels associés aux pièces d'équipement individuelles.

2. Procédé selon la revendication 1,
**caractérisé en ce que** les pièces d'équipement sont positionnées et fixées individuellement dans l'espace, **en ce que** le tube est amené pour chaque pièce d'équipement dans une position axiale et angulaire associée conforme aux déterminations, et un tronçon individuel du tube associé axialement à la pièce d'équipement est élargi plastiquement.

3. Procédé selon l'une des revendications 1 ou 2,
**caractérisé en ce que** les pièces d'équipement pour un tube sont positionnées et fixées séquentiellement dans une position dans l'espace qui coïncide quant à leur axe médian et quant à une surface d'appui, et sont immobilisées sur le tube.

4. Procédé selon l'une des revendications 1 ou 2,
**caractérisé en ce que** différentes pièces d'équipement pour un tube sont positionnées et fixées dans des positions dans l'espace qui diffèrent quant à leurs axes médians et décalées parallèlement les unes par rapport aux autres, et sont immobilisées séquentiellement sur le tube.

5. Procédé selon l'une des revendications 1 à 4,
**caractérisé en ce que** le tube et les pièces d'équipement sont déplacés et positionnés avec des axes médians verticaux.

6. Procédé selon l'une des revendications 1 à 5, dans lequel le tube est élargi au moyen d'un corps de sonde dans les tronçons individuels associés aux pièces d'équipement,
**caractérisé en ce qu'**une pièce d'équipement respective est positionnée et fixée dans l'espace, **en ce que** le corps de sonde est introduit, depuis une position en retrait axial jusque dans une position à l'intérieur de la pièce d'équipement, et **en ce que** le tube est introduit par-dessus le corps de sonde et à l'intérieur de la pièce d'équipement et est amené dans une position axiale et angulaire conforme aux déterminations par rapport à la pièce d'équipement pour élargir un tronçon individuel associé à la pièce d'équipement.

7. Procédé selon l'une des revendications 1 à 6,
**caractérisé en ce que** le tube est maintenu directement dans une prise non modifiée pendant l'assemblage de la totalité des pièces d'équipement.

8. Procédé selon l'une des revendications 1 à 7,
**caractérisé en ce que** la totalité des pièces d'équipement pour un tube sont positionnées et fixées dans l'espace pour l'assemblage dans une position en hauteur essentiellement coïncidante.

9. Appareil pour l'assemblage d'arbre creux portant des équipements, qui est constitué d'un tube et de pièces d'équipement enfilées sur celui-ci, comme des cames, des brides, des douilles de palier, des générateurs d'impulsions, des roues dentées ou des engrenages, dans lequel le tube en place à l'intérieur des pièces d'équipement est élargi plastiquement radialement dans des tronçons individuels par application d'une pression intérieure de telle façon que les pièces d'équipement sont immobilisées sur le tube avec assemblage serré permanent,
**caractérisé en ce qu'**il est prévu une unique unité de positionnement et de fixation (40) pour les pièces d'équipement et un dispositif unique de maintien et de positionnement (20) pour le tube, grâce à quoi les pièces d'équipement et le tube sont positionnés et fixés les uns aux autres respectivement individuellement, et le tube est élargi plastiquement en séquence dans les tronçons individuels associés aux pièces d'équipement individuelles.

10. Appareil selon la revendication 9,
**caractérisé en ce que** l'unité de positionnement et de fixation (40) est agencée de façon stationnaire dans l'espace, et le dispositif de maintien et de positionnement (20) est susceptible d'être entraîné par rapport à celle-ci axialement et en rotation par rapport à l'axe du tube.

11. Appareil selon l'une des revendications 9 ou 10,
**caractérisé en ce que** l'axe du dispositif de maintien et de positionnement (20) pour le tube et l'axe de maintien de l'unité de positionnement et de fixation (40) sont orientés verticalement.

12. Appareil selon l'une des revendications 9 à 11, comprenant un corps de sonde pour élargir des tronçons individuels du tube,
**caractérisé en ce que** le corps de sonde (64) comprend un unique tronçon actif pour l'élargissement d'un tronçon individuel de tube (18).

13. Appareil selon la revendication 12,
**caractérisé en ce que** le corps de sonde (64) est déplaçable entre deux positions axiales, le tronçon actif étant disposé dans une position inférieure au-dessous de l'unité de positionnement et de fixation (40) et étant disposé dans une position supérieure à l'intérieur de l'unité de positionnement et de fixation (40).

14. Appareil selon l'une des revendications 9 à 12,
**caractérisé en ce que** le dispositif de maintien et de positionnement (20) comprend un logement interchangeable (22) pour un mandrin de serrage (17, 23) pour un tube.

15. Appareil selon la revendication 14,
**caractérisé en ce qu'**une unité de transport de pièces à oeuvrer (10) comprend un logement interchangeable (16) pour un mandrin de serrage (17, 23) pour un tube.

16. Appareil selon la revendication 15,
**caractérisé en ce que** l'unité de transport de pièces à oeuvrer (10) comprend une matrice pour un jeu complet de pièces d'équipement pour un tube.

17. Appareil selon la revendication 14 et 15,
**caractérisé en ce qu'**il est prévu un dispositif d'échange d'outils (25) destiné à la manutention de mandrins de serrage (17, 23), agencé en particulier sur le dispositif de maintien et de positionnement (20).

18. Appareil selon l'une des revendications 9 à 17,
**caractérisé en ce qu'**une voie de transport (13) et des organes de serrage pour une unité de transport de pièces à oeuvrer (10) sont agencés daus l'appareil.

19. Appareil selon l'une des revendications 9 à 18,
**caractérisé en ce qu'**il est prévu un dispositif de transport horizontal (30) pour recevoir et pour transférer des pièces d'équipement individuelles depuis une position d'attente jusque dans l'unité de positionnement et de fixation (40).

20. Installation formée de plusieurs appareils selon l'une des revendications 9 à 19, dans laquelle chaque appareil forme une station d'assemblage,
**caractérisée en ce que** les stations individuelles (80) sont reliées les unes aux autres via un trajet de transport (81) soit linéairement soit en une boucle, **en ce qu'**il est prévu des unités de transport de pièces à oeuvrer (10) transportables de station en station, ces unités comprenant des moyens de réception (16) pour un mandrin de serrage pour un tube, et **en ce que** des dispositifs de maintien et de positionnement (20) des stations comprennent également des moyens de réception (22) pour un mandrin de serrage pour un tube.
